# EUROPEAN PATENT SPECIFICATION

(11) **EP 3 073 797 B1**
(45) Date of publication and mention of the grant of the patent: **07.04.2021**
(21) Application number: 13899961.0
(22) Date of filing: 20.12.2013
(51) Int. Cl.: H04W 56/00, H04W 76/15

(54) **AUXILIARY CARRIER CHANGING METHODS, TERMINAL, NETWORK DEVICE AND COMPUTER-READABLE STORAGE MEDIUM**
HILFSTRÄGERAUSTAUSCHVERFAHREN, ENDGERÄT, NETZWERKVORRICHTUNG UND COMPUTER LESBARER DATENTRÄGER
PROCÉDÉ DE MODIFICATION D'UNE PORTEUSE AUXILIAIRE, TERMINAL, ÉQUIPEMENT DE RÉSEAU ET SUPPORT DE STOCKAGE LISIBLE PAR ORDINATEUR

(43) Date of publication of application: 28.09.2016
(73) Proprietor: Huawei Technologies Co., Ltd., Longgang District Shenzhen, Guangdong 518129 (CN)
(72) Inventor: LI, Bingzhao, Shenzhen Guangdong 518129 (CN); QUAN, Wei, Shenzhen Guangdong 518129 (CN); HU, Zhenxing, Shenzhen Guangdong 518129 (CN); ZHANG, Jian, Shenzhen Guangdong 518129 (CN); YANG, Xiaodong, Shenzhen Guangdong 518129 (CN)
(74) Representative: Gill Jennings & Every LLP
(86) International application number: PCT/CN2013/090095
(87) International publication number: WO 2015/089825

(56) References cited:
- EP-A1- 2 536 235
- CN-A- 101 325 437
- CN-A- 101 772 087
- CN-A- 103 118 437
- US-A1- 2011 026 475
- US-A1- 2012 057 544
- US-A1- 2013 010 620
- "3rd Generation Partnership Project; Technical Specification Group Radio Access Network; Evolved Universal Terrestrial Radio Access (E-UTRA); Radio Resource Control (RRC); Protocol specification (Release 11)", 3GPP STANDARD; 3GPP TS 36.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V11.5.0, 16 September 2013 (2013-09-16), pages 1-347, XP050712276, [retrieved on 2013-09-16]

## Description

### TECHNICAL FIELD

The present invention relates to the field of communications technologies, and in particular, to methods for changing a secondary carrier, a terminal, a network device, and a computer readable computer medium

### BACKGROUND

In a Long Term Evolution (Long Term Evolution, LTE) multicarrier technology, multiple carriers may be simultaneously configured for a terminal, and both a secondary carrier and a primary carrier may be changed. Change of the secondary carrier can only be completed by deleting an old secondary carrier and adding a new secondary carrier, and each time after a secondary carrier is added, the terminal automatically enters a deactivated state. If the newly added secondary carrier needs to be used, a network device sends an activation instruction to the terminal, and the carrier can be used only after the terminal responds to activation.

It is found that in the LTE multicarrier technology, a secondary carrier after each change automatically enters a deactivated state, and a requirement of a terminal is not considered.

US 2013/0010620 relates to connection reconfiguration in a multicarrier OFDM network. EP 2 536 235 relates to wireless communication apparatus, wireless communication system and wireless communication method US 2011/026475 A1 relates to a method for performing carrier management procedure in a multi-carrier supported wideband wireless communication system.

### SUMMARY

The invention is carried out according to the appended independent claims. Optional features of the invention are carried out according to the dependent claims.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person skilled in the art may still derive other drawings from these accompanying drawings without creative efforts.
FIG. 1 is a schematic diagram of an embodiment of a terminal according to the embodiments of the present invention;
FIG. 2 is a schematic diagram of another embodiment of the terminal according to the embodiments of the present invention;
FIG. 3 is a schematic diagram of an embodiment of a network device according to the embodiments of the present invention;
FIG. 4 is a schematic diagram of another embodiment of the network device not being part of the invention;
FIG. 5 is a schematic diagram of another embodiment of the network device according to the embodiments of the present invention;
FIG. 6 is a schematic diagram of an embodiment of a method for changing a secondary carrier according to the embodiments of the present invention;
FIG. 7 is a schematic diagram of an embodiment of the method for changing a secondary carrier according to the embodiments of the present invention;
FIG. 8 is a schematic diagram of another embodiment of the terminal according to the embodiments of the present invention;
FIG. 9 is a schematic diagram of another embodiment of the network device according to the embodiments of the present invention; and
FIG. 10 is a schematic diagram of an embodiment of a communications system according to the embodiments of the present invention.

### DESCRIPTION OF EMBODIMENTS

Embodiments of the present invention provide a terminal, and during change of a secondary carrier, the terminal can set a state of the changed secondary carrier as required, which improves flexibility of state setting for the changed secondary carrier. The embodiments of the present invention further provide a corresponding network device, methods for changing a secondary carrier and a computer readable carrier medium. Detailed descriptions are made below separately.

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person skilled in the art based on the embodiments of the present invention without creative efforts shall fall within the protection scope of the present invention.

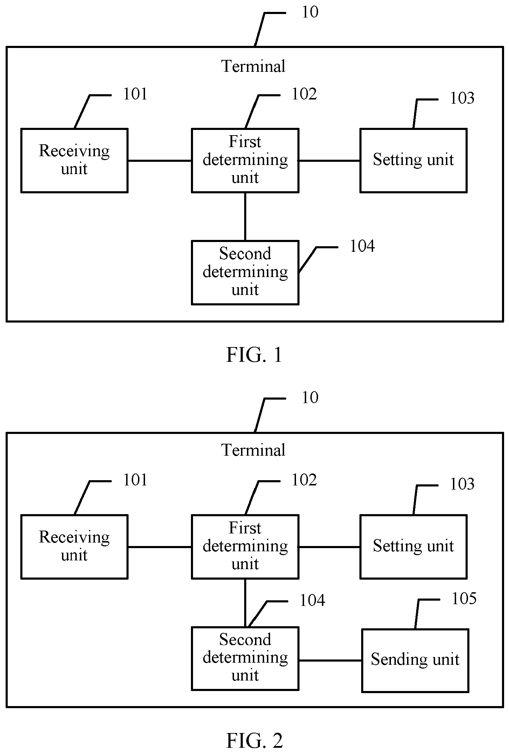

Referring to FIG. 1, an embodiment of the terminal according to the embodiments of the present invention includes:
a receiving unit 101, configured to receive a secondary carrier change instruction sent by a network device, where the secondary carrier change instruction includes feature information of a changed secondary carrier;
a first determining unit 102, configured to determine the changed secondary carrier according to the feature information, received by the receiving unit 101, of the changed secondary carrier;
a setting unit 103, configured to set, according to a required state for the changed secondary carrier determined by the first determining unit 102, a state of the changed secondary carrier to the required state, where the required state for the changed secondary carrier includes an activated state and a deactivated state; and
a second determining unit 104, configured to determine synchronization information of the changed secondary carrier determined by the first determining unit 102.

Compared with the prior art in which a secondary carrier after each change automatically enters a deactivated state, and a requirement of a terminal is not considered, the terminal provided in this embodiment of the present invention can set the state of the changed secondary carrier as required, which improves flexibility of state setting for the changed secondary carrier.

In the invention, the feature information of the changed secondary carrier is at least one of a frequency and a bandwidth of the changed secondary carrier,
the first determining unit 102 is configured to determine the changed secondary carrier according to the at least one of the frequency and the bandwidth of the changed secondary carrier.

Optionally, in the invention, the feature information of the changed secondary carrier is a number of the changed secondary carrier,
the first determining unit 102 is configured to select, according to the number of the changed secondary carrier, the changed secondary carrier corresponding to the number from secondary carriers preconfigured by the network device.

In the invention,
the setting unit 103 is configured to: when the changed secondary carrier is required to be in the activated state, set the state of the changed secondary carrier to the activated state; or when the changed secondary carrier is required to be in the deactivated state, set the state of the changed secondary carrier to the deactivated state.

In the present invention,
the first determining unit 102 is further configured to determine the required state for the changed secondary carrier according to state indication information added by the network device to the secondary carrier change instruction.

Optionally, based on the embodiment corresponding to FIG. 1, in another embodiment of the terminal not being part of the present invention,
the first determining unit 102 is further configured to determine the required state for the changed secondary carrier according to a preset state determining policy.

The preset state determining policy may be a policy of polling the activated state and the deactivated state. The activated state is determined as the required state for the first change, the deactivated state is determined as the required state for the second change, and so on. The activated state is determined as the required state for all odd-numbered changes, and the deactivated state is determined as the required state for all even-numbered changes.

Optionally and not part of the invention, based on the embodiment corresponding to FIG. 1,
the second determining unit 104 is configured to determine a frame boundary of the changed secondary carrier by means of synchronization channel search.

Optionally, based on the embodiment corresponding to FIG. 1, in another embodiment of the terminal according to the embodiments of the present invention,
the second determining unit 104 is configured to determine a frame boundary of the changed secondary carrier according to synchronization indication information added by the network device to the secondary carrier change instruction.

When the synchronization indication information indicates that resynchronization is required,
the second determining unit 104 is configured to redetermine the frame boundary of the changed secondary carrier by means of synchronization channel search.

When the synchronization indication information instructs to use synchronization information of an original secondary carrier,
the second determining unit 104 is configured to determine a frame boundary of the original secondary carrier as the frame boundary of the changed secondary carrier.

When the synchronization indication information is information about a reference cell,
the second determining unit 104 is configured to determine the frame boundary of the changed secondary carrier according to a frame boundary of the reference cell indicated by the information about the reference cell.

Referring to FIG. 2, in another embodiment of the terminal according to the embodiments of the present invention, the terminal 10 further includes:
a sending unit 105, configured to: after the second determining unit 104 determines the synchronization information, send a synchronization completion message to the network device, so that the network device sends data to the terminal according to the synchronization completion message.

The network device in this embodiment of the present invention may be a base station, an evolved base station, a base station controller, or a radio network controller.

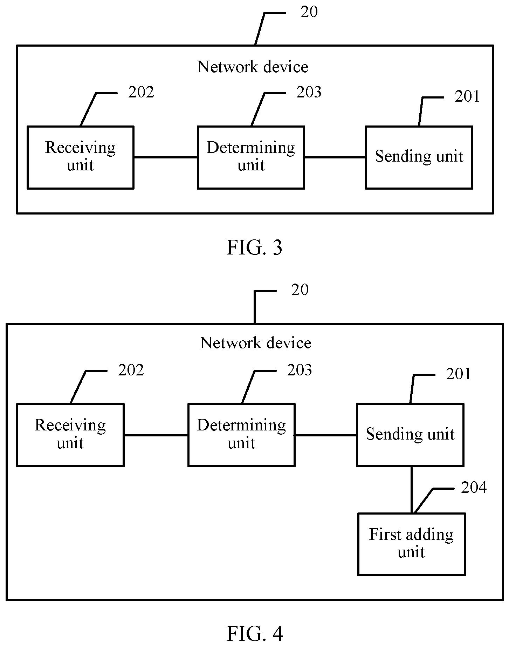

Referring to FIG. 3, an embodiment of the network device according to the embodiments of the present invention includes:
a sending unit 201, configured to send a secondary carrier change instruction to a terminal, where the secondary carrier change instruction includes feature information of a changed secondary carrier, so that the terminal determines the changed secondary carrier according to the feature information of the changed secondary carrier;
a receiving unit 202, configured to receive a synchronization completion message sent by the terminal; and
a determining unit 203, configured to determine, according to the synchronization completion message received by the receiving unit 202, that the terminal has already synchronized with the changed secondary carrier, where
the sending unit 201 is configured to: after the determining unit 203 determines that the terminal has already synchronized with the changed secondary carrier, send data to the terminal by using the changed secondary carrier.

Compared with the prior art in which a secondary carrier after each change automatically enters a deactivated state, and a requirement of a terminal is not considered, the network device provided in this embodiment of the present invention can instruct a terminal to change a secondary carrier, so that after change of the secondary carrier, the terminal sets a state of the changed secondary carrier as required, which improves flexibility of state setting for the changed secondary carrier.

Based on the embodiment corresponding to FIG. 3, refer to FIG. 4. In another embodiment of the network device not being part of the present invention, the network device further includes:
a first adding unit 204, configured to add state indication information to the secondary carrier change instruction sent by the sending unit 201, so that the terminal determines a required state for the changed secondary carrier according to the state indication information, where the required state for the changed secondary carrier includes an activated state and a deactivated state.

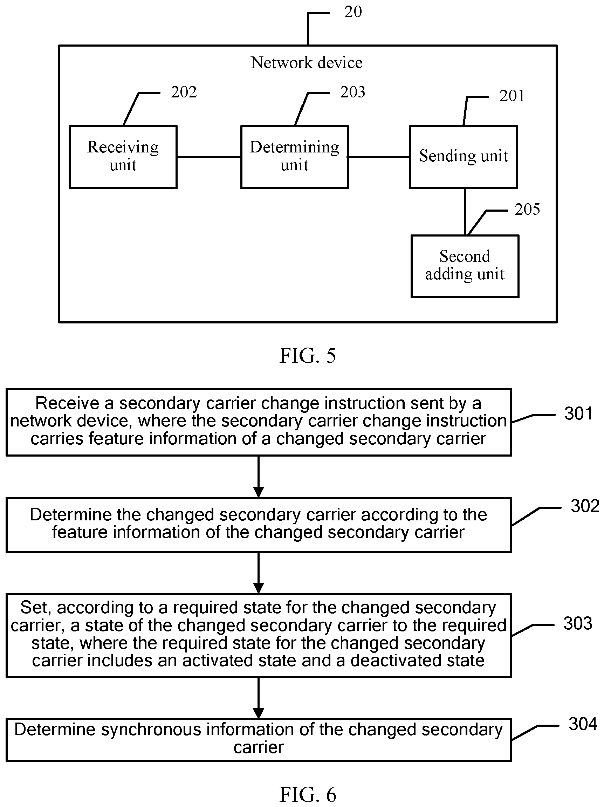

Based on the embodiment corresponding to FIG. 3, refer to FIG. 5. In another embodiment of the network device according to the embodiments of the present invention, the network device further includes:
a second adding unit 105, configured to add state indication information to the secondary carrier change instruction sent by the sending unit 201, so that the terminal determines a required state for the changed secondary carrier according to the state indication information, where the required state for the changed secondary carrier includes an activated state and a deactivated state.

Referring to FIG. 6, an embodiment of the method for changing a secondary carrier according to the embodiments of the present invention includes:

301: Receive a secondary carrier change instruction sent by a network device, where the secondary carrier change instruction includes feature information of a changed secondary carrier.

The changed secondary carrier in this embodiment of the present invention is a secondary carrier after change.

The feature information of the changed secondary carrier may be at least one of a frequency and a bandwidth of the changed secondary carrier, or may be a number of a secondary carrier preset on a terminal, and may further include an enabling status of the secondary carrier corresponding to the number. For example, the secondary carrier with the number is in an enabled state or is in a disabled state.

302: Determine the changed secondary carrier according to the feature information of the changed secondary carrier.

Optionally, when the feature information of the changed secondary carrier is the at least one of the frequency and the bandwidth of the changed secondary carrier, the changed secondary carrier may be determined according to the at least one of the frequency and the bandwidth of the changed secondary carrier.

For example, when an original secondary carrier of the terminal has a frequency F1 and a bandwidth W1, and when the feature information of the changed secondary carrier that is included in the secondary carrier change instruction is a frequency F2 and a bandwidth W2, the original secondary carrier is changed to a secondary carrier with the frequency F2 and the bandwidth W2.

When the feature information of the changed secondary carrier that is included in the secondary carrier change instruction is F2, the original bandwidth W1 is used, and the original secondary carrier is changed to a secondary carrier with the frequency F2 and the bandwidth W1.

When the feature information of the changed secondary carrier that is included in the secondary carrier change instruction is W2, the original frequency F1 is used, and the original secondary carrier is changed to a secondary carrier with the frequency F1 and the bandwidth W2.

Optionally, when the feature information of the changed secondary carrier is the number of the secondary carrier preset on the terminal, the changed secondary carrier corresponding to the number may be selected, according to the number of the changed secondary carrier, from secondary carriers preconfigured by the network device.

For example, seven secondary carriers are preset on the terminal, and numbers of the seven secondary carriers are 1 to 7, where a corresponding frequency and bandwidth are configured for each secondary carrier, and the secondary carrier may be specified to be in the enabled state or the disabled state during initial preconfiguration. A changed secondary carrier may be subsequently determined according to a status of interference to each carrier. For example, original secondary carriers used by the terminal are a secondary carrier number 2 and a secondary carrier number 3, and a secondary carrier change instruction is received, where the change instruction includes numbers of changed secondary carriers, and enabled or disabled states of the secondary carriers corresponding to the numbers. For example, if the secondary carrier change instruction includes that secondary carriers with a number of 4 and a number of 5 are to be enabled and the secondary carriers with the number of 2 and the number of 3 are to be disabled, frequencies and bandwidths corresponding to the secondary carrier number 2 and the secondary carrier number 3 are changed to frequencies and bandwidths corresponding to the secondary carriers number of 4 and the secondary carrier number of 5.

303: Set, according to a required state for the changed secondary carrier, a state of the changed secondary carrier to the required state, where the required state for the changed secondary carrier includes an activated state and a deactivated state.

Optionally, when the changed secondary carrier is required to be in the activated state, the state of the changed secondary carrier is set to the activated state. Alternatively, when the changed secondary carrier is required to be in the deactivated state, the state of the changed secondary carrier is set to the deactivated state.

304: Determine synchronization information of the changed secondary carrier.

The synchronization information of the changed secondary carrier refers to information about a frame boundary of the changed secondary carrier.

In this embodiment of the present invention, a secondary carrier change instruction sent by a network device is received, where the secondary carrier change instruction includes feature information of a changed secondary carrier; the changed secondary carrier is determined according to the feature information of the changed secondary carrier; according to a required state for the changed secondary carrier, a state of the changed secondary carrier is set to the required state, where the required state for the changed secondary carrier includes an activated state and a deactivated state; and synchronization information of the changed secondary carrier is determined. Compared with the prior art in which a secondary carrierafter each change automatically enters a deactivated state, and a requirement of a terminal is not considered, in the method for changing a secondary carrier provided in this embodiment of the present invention, the state of the changed secondary carrier can be set as required, which improves flexibility of state setting for the changed secondary carrier.

In the invention and based on the embodiment corresponding to FIG. 6, before the setting, according to a required state for the changed secondary carrier, a state of the changed secondary carrier to the required state, the method further includes:
determining the required state for the changed secondary carrier according to state indication information added by the network device to the secondary carrier change instruction.

In the present invention, for the required state for the changed secondary carrier, the network device adds an activated state indication or a deactivated state indication to the secondary carrier change instruction. In this way, the terminal can set the state of the changed secondary carrier to the activated state according to the activated state indication, or the terminal sets the state of the changed secondary carrier to the deactivated state according to the deactivated state indication.

Optionally and not part of the invention, based on the embodiment corresponding to FIG. 6, before the setting, according to a required state for the changed secondary carrier, a state of the changed secondary carrier to the required state, the method further includes:
determining the required state for the changed secondary carrier according to a preset state determining policy.

The preset state determining policy may be a policy of polling the activated state and the deactivated state. The activated state is determined as the required state for the first change, the deactivated state is determined as the required state for the second change, and so on. The activated state is determined as the required state for all odd-numbered changes, and the deactivated state is determined as the required state for all even-numbered changes.

Optionally and not part of the invention, based on the embodiment corresponding to FIG. 6 or the optional embodiment corresponding to FIG. 6, in another embodiment of the method for changing a secondary carrier, the determining synchronization information of the changed secondary carrier may include:
determining a frame boundary of the changed secondary carrier by means of synchronization channel search.

The synchronization information may be the information about the frame boundary of the changed secondary carrier. After the secondary carrier is changed, the synchronization information probably changes, and therefore, the synchronization information of the changed secondary carrier needs to be redetermined by means of synchronization channel search. A specific synchronization channel search solution belongs to the prior art, and no more details are described herein.

The terminal may further perform synchronous search with reference to another secondary carrier, to fasten a synchronization process, where a synchronization reference secondary carrier may be determined by the terminal, for example, the terminal may use, based on frequency information of an enabled secondary carrier, a secondary carrier whose frequency is close to the enabled secondary carrier and that is already synchronized, as the synchronization reference secondary carrier.

Based on the embodiment corresponding to FIG. 6 or the optional embodiment corresponding to FIG. 6, in another embodiment of the method for changing a secondary carrier according to the embodiments of the present invention, the determining synchronization information of the changed secondary carrier may include:
determining the synchronization information of the changed secondary carrier according to synchronization indication information added by the network device to the secondary carrier change instruction.

In this embodiment of the present invention, the network device may add the synchronization indication information to the secondary carrier change instruction before sending the secondary carrier change instruction, where the synchronization indication information may indicate to the terminal that no resynchronization is required, and reference needs to be made to only synchronization information of the original secondary carrier, and the terminal may receive data from the changed secondary carrier according to the synchronization indication information by using the synchronization information of the original secondary carrier.

The synchronization indication information may also instruct the terminal to acquire the synchronization information according to synchronization reference information specified by the network device. For example, the network device specifies that for synchronization information of a changed secondary carrier 4, reference is made to synchronization information of an original secondary carrier with a number of 2, and for synchronization information of a changed secondary carrier 5, reference is made to synchronization information of an original secondary carrier with a number of 3; and the terminal may receive data from the changed secondary carrier with the number of 4 according to the synchronization information of the secondary carrier with the number of 2, and may receive data from the changed secondary carrier with the number of 5 according to the synchronization information of the secondary carrier with the number of 3.

Optionally, when the synchronization indication information indicates that resynchronization is required, the determining a frame boundary of the changed secondary carrier may include:
redetermining the frame boundary of the changed secondary carrier by means of synchronization channel search.

Optionally, when the synchronization indication information instructs to use the synchronization information of the original secondary carrier, the determining a frame boundary of the changed secondary carrier may include:
determining a frame boundary of the original secondary carrier as the frame boundary of the changed secondary carrier.

Optionally, when the synchronization indication information is information about a reference cell, the determining a frame boundary of the changed secondary carrier may include:
determining the frame boundary of the changed secondary carrier according to a frame boundary of the reference cell indicated by the information about the reference cell.

Optionally, based on the embodiment corresponding to FIG. 6 or the optional embodiment corresponding to FIG. 6, in another embodiment of the method for changing a secondary carrier according to the embodiments of the present invention, after the determining synchronization information of the changed secondary carrier, the method may further include:
sending a synchronization completion message to the network device, so that the network device sends data to the terminal according to the synchronization completion message.

In this embodiment of the present invention, after completing synchronization, the terminal needs to send the synchronization completion message to the network device. In this way, the network device sends data corresponding to the terminal to the terminal.

The synchronization completion message may be indication information included in a Media Access Control (Media Access Control, MAC) data frame, and when receiving this indication information, the network device may consider that the terminal has already synchronized with the changed secondary carrier.

The synchronization completion message may also be indirectly indicated by a specific CQI value, and when the terminal reports a specific CQI measurement result, the network device may consider that the terminal has already synchronized with the changed secondary carrier.

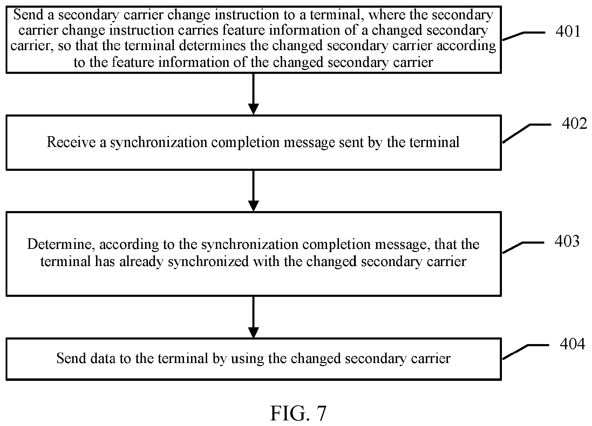

Referring to FIG. 7, another embodiment of the method for changing a secondary carrier according to the embodiments of the present invention includes:
401: Send a secondary carrier change instruction to a terminal, where the secondary carrier change instruction includes feature information of a changed secondary carrier, so that the terminal determines the changed secondary carrier according to the feature information of the changed secondary carrier.
402: Receive a synchronization completion message sent by the terminal.
403: Determine, according to the synchronization completion message, that the terminal has already synchronized with the changed secondary carrier.
404: Send data to the terminal by using the changed secondary carrier.

Compared with the prior art in which a secondary carrier after each change automatically enters a deactivated state, and a requirement of a terminal is not considered, in the method for changing a secondary carrier provided in this embodiment of the present invention, the terminal can set the state of the changed secondary carrier as required, which improves flexibility of state setting for the changed secondary carrier.

According to the present invention, the method further includes:
adding state indication information to the secondary carrier change instruction, so that the terminal determines a required state for the changed secondary carrier according to the state indication information, where the required state for the changed secondary carrier includes an activated state and a deactivated state.

In this embodiment of the present invention, a network device may determine the required state for the changed secondary carrier according to whether the changed secondary carrier is used soon to send the data to the terminal. When the data needs to be sent to the terminal soon, the network device may indicate that the changed secondary carrier is required to be in the activated state. In this way, after the terminal synchronizes with the changed secondary carrier, the data may be sent to the terminal, and no activation instruction needs to be further sent to the terminal, so that time for activating the changed secondary carrier is saved. If no data needs to be sent to the terminal, the network device may indicate that the changed secondary carrier is to be in the deactivated state; in this way, power consumption of the terminal can be reduced.

Optionally, based on the embodiment corresponding to FIG. 7, in another embodiment of the method for changing a secondary carrier according to the embodiments of the present invention, the method may further include:
adding synchronization indication information to the secondary carrier change instruction, so that the terminal determines synchronization information of the changed secondary carrier according to the synchronization indication information.

In this embodiment of the present invention, when the network device sets the feature information of the changed secondary carrier, and when it is determined that a frequency F2 of the changed secondary carrier does not differ much from a frequency F1 of an original secondary carrier used by the terminal, the synchronization indication information may be added to the secondary carrier change instruction, to indicate to the terminal that no resynchronization is required, and it is enough to use synchronization information of the original secondary carrier. In this way, not only power consumption is reduced, but also a synchronization speed is improved.

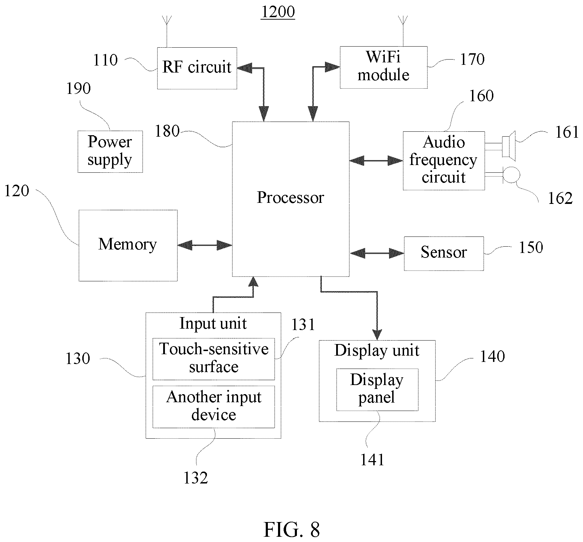

Refer to FIG. 8, which is a schematic structural diagram of a terminal involved in an embodiment of the present invention. The terminal may be configured to implement the method for changing a secondary carrier provided in the foregoing embodiment. Specifically:
the terminal 1200 may include components such as an RF (Radio Frequency, radio frequency) circuit 110, a memory 120 including one or more computer readable storage media, an input unit 130, a display unit 140, a sensor 150, an audio frequency circuit 160, a WiFi (wireless fidelity, wireless fidelity) module 170, a processor 180 including one or more processing cores, and a power supply 190. A person skilled in the art may understand that a terminal structure shown in FIG. 8 constitutes no limitation to the terminal, and the terminal may include more or fewer components than those shown in the figure, or some components may be combined, or a different component deployment may be used.

The RF circuit 110 may be configured to receive and send signals during an information receiving and sending process or a call process, particularly, after receiving downlink information of a base station, deliver the downlink information of the base station to the one or more processors 180 for processing, and in addition, send related uplink data to the base station. Usually, the RF circuit 110 includes, but is not limited to, an antenna, at least one amplifier, a tuner, one or more oscillators, a subscriber identity module (SIM) card, a transceiver, a coupler, an LNA (Low Noise Amplifier, low noise amplifier), a diplexer, and the like. In addition, the RF circuit 110 may further communicate with a network and another device by means of wireless communication. The wireless communication may use any communications standard or protocol, which includes, but is not limited to, GSM (Global System for Mobile Communication, Global System for Mobile Communications), GPRS (General Packet Radio Service, General Packet Radio Service), CDMA (Code Division Multiple Access, Code Division Multiple Access), WCDMA (Wideband Code Division Multiple Access, Wideband Code Division Multiple Access), LTE (Long Term Evolution, Long Term Evolution), email, SMS (Short Message Service, Short Message Service), and the like.

The memory 120 may be configured to store a software program and module. The processor 180 runs the software program and module stored in the memory 120, to implement various functional applications and data processing. The memory 120 may mainly include a program storage area and a data storage area, where the program storage area may store an operating system, an application program required by at least one function (such as a sound playback function and an image display function), and the like; and the program storage area may store data (such as audio frequency data and an address book) created according to the use of the terminal 1200, and the like. In addition, the memory 120 may include a high-speed random access memory, and may also include a non-volatile memory, for example, at least one magnetic disk memory device, a flash memory device, or another volatile solid-state memory device. Correspondingly, the memory 120 may further include a memory controller, so as to provide access of the processor 180 and the input unit 130 to the memory 120.

The input unit 130 may be configured to receive input figure or character information, and generate a keyboard, mouse, joystick, optical or trackball signal input related to a user setting and function control. Specifically, the input unit 130 may include a touch-sensitive surface 131 and another input device 132. The touch-sensitive surface 131, which may also be referred to as a touch display screen or a touch panel, may collect a touch operation of a user on or near the touch-sensitive surface (such as an operation of a user on or near the touch-sensitive surface 131 by using any suitable object or attachment, such as a finger or a touch pen), and drive a corresponding connection apparatus according to a preset program. Optionally, the touch-sensitive surface 131 may include two parts: a touch detection apparatus and a touch controller. The touch detection apparatus detects a touch location of the user, detects a signal generated by the touch operation, and transfers the signal to the touch controller. The touch controller receives touch information from the touch detection apparatus, converts the touch information into touch point coordinates, and then sends the touch point coordinates to the processor 180. Moreover, the touch controller can receive and execute a command sent from the processor 180. In addition, the touch-sensitive surface 131 may be a resistive, capacitive, infrared, or surface sound wave type touch-sensitive surface. In addition to the touch-sensitive surface 131, the input unit 130 may further include the another input device 132. Specifically, the another input device 132 may include, but is not limited to, one or more of a physical keyboard, a functional key (such as a volume control key or a switch key), a trackball, a mouse, and a joystick.

The display unit 140 may be configured to display information input by the user or information provided for the user, and various graphical user interfaces of the terminal 1200. These graphical user interfaces may be formed by a graph, a text, an icon, a video, or any combination thereof. The display unit 140 may include a display panel 141. Optionally, the display panel 141 may be configured by using an LCD (Liquid Crystal Display, liquid crystal display), an OLED (Organic Light-Emitting Diode, organic light-emitting diode), or the like. Further, the touch-sensitive surface 131 may cover the display panel 141. After detecting a touch operation on or near the touch-sensitive surface 131, the touch-sensitive surface 131 transfers the touch operation to the processor 180, so as to determine the type of the touch event. Then, the processor 180 provides a corresponding visual output on the display panel 141 according to the type of the touch event. Although, in FIG. 8, the touch-sensitive surface 131 and the display panel 141 are used as two separate components to implement input and output functions, in some embodiments, the touch-sensitive surface 131 and the display panel 141 may be integrated to implement the input function and output functions.

The terminal 1200 may further include at least one sensor 150, for example, an optical sensor, a motion sensor and other sensors. Specifically, the optical sensor may include an ambient light sensor and a proximity sensor, where the ambient light sensor may adjust luminance of the display panel 141 according to brightness of the ambient light. The proximity sensor may switch off the display panel 141 and/or backlight when the terminal 1200 is moved to the ear. As one type of motion sensor, a gravity acceleration sensor may detect magnitude of accelerations in various directions (generally on three axes), may detect magnitude and a direction of the gravity when static, and may be configured to identify an application of a mobile phone gesture (such as switchover between horizontal and vertical screens, a related game, and gesture calibration of a magnetometer), a function related to vibration recognition (such as a pedometer and a knock), and the like. Other sensors, such as a gyroscope, a barometer, a hygrometer, a thermometer, and an infrared sensor, which may be configured in the terminal 1200 are not further described herein.

The audio circuit 160, a loudspeaker 161, and a microphone 162 may provide an audio interface between the user and the terminal 1200. The audio circuit 160 may convert received audio data into an electric signal and transmit the electric signal to the loudspeaker 161. The loudspeaker 161 converts the electric signal into a sound signal for output. On the other hand, the microphone 162 converts a collected sound signal into an electric signal. The audio circuit 160 receives the electric signal and converts the electric signal into audio data, and outputs the audio data to the processor 180 for processing. Then, the processor 180 sends the audio data to, for example, another terminal device by using the RF circuit 110, or outputs the audio data to the memory 120 for further processing. The audio circuit 160 may further include an earplug jack, so as to provide communication between a peripheral earphone and the terminal 1200.

WiFi is a short distance wireless transmission technology. The terminal 1200 may help, by using the WiFi module 170, the user to receive and send e-mails, browse a webpage, access streaming media, and so on, which provides wireless broadband Internet access for the user. Although FIG. 8 shows the WiFi module 170, it may be understood that the WiFi module 170 is not a necessary component of the terminal 1200, and when required, the wireless communications unit may be omitted as long as the scope of the essence of the present invention is not changed.

The processor 180 is a control center of the terminal 1200, and is connected to various parts of the mobile phone by using various interfaces and lines. By running or executing the software program and/or module stored in the memory 120, and invoking data stored in the memory 120, the processor 180 performs various functions and data processing of the terminal 1200, thereby performing overall monitoring on the mobile phone. Optionally, the processor 180 may include the one or more processing cores. Preferably, the processor 180 may integrate an application processor and a modem. The application processor mainly processes an operating system, a user interface, an application program, and the like. The modem mainly processes wireless communication. It may be understood that the foregoing modem may also not be integrated into the processor 180.

The terminal 1200 may further include the power supply 190 (for example, a battery) that supplies power for various components. Preferably, the power supply may be logically connected to the processor 180 by using a power management system, so as to implement a function such as charging, discharging and power consumption management by using the power management system. The power supply 190 may further include one or more of a direct current or alternate current power supply, a re-charging system, a power supply fault detection circuit, a power supply converter or an inverter, a power supply state indicator, and any other components.

Although not shown in the figure, the terminal 1200 may further include a camera, a Bluetooth module, and the like, and details are not further described herein. Specifically, in this embodiment, the display unit of the terminal is a touch screen display, and the terminal further includes a memory and one or more programs, where the one or more programs are stored in the memory, and are configured to be executed by one or more processors. The one or more programs include instructions for performing the following operations:
receiving a secondary carrier change instruction sent by a network device, where the secondary carrier change instruction includes feature information of a changed secondary carrier;
determining the changed secondary carrier according to the feature information of the changed secondary carrier;
setting, according to a required state for the changed secondary carrier, a state of the changed secondary carrier to the required state, where the required state for the changed secondary carrier includes an activated state and a deactivated state; and
determining synchronization information of the changed secondary carrier.

Assuming that the foregoing description is a first possible implementation manner, in a second possible implementation manner that is provided based on the first possible implementation manner, the feature information of the changed secondary carrier is at least one of a frequency and a bandwidth of the changed secondary carrier, and the memory of the terminal further includes an instruction for performing the following operation:
determining the changed secondary carrier according to the at least one of the frequency and the bandwidth of the changed secondary carrier.

In a third possible implementation manner that is provided based on the first possible implementation manner, the feature information of the changed secondary carrier is a number of the changed secondary carrier, and the memory of the terminal further includes an instruction for performing the following operation:
selecting, according to the number of the changed secondary carrier, the changed secondary carrier corresponding to the number from secondary carriers preconfigured by the network device.

In a fourth possible implementation manner that is provided based on the first, second or third possible implementation manner, the memory of the terminal further includes an instruction for performing the following operation:
when the changed secondary carrier is required to be in the activated state, setting the state of the changed secondary carrier to the activated state; or
when the changed secondary carrier is required to be in the deactivated state, setting the state of the changed secondary carrier to the deactivated state.

In a fifth possible implementation manner that is provided based on the first, second, third or fourth possible implementation manner, the memory of the terminal further includes an instruction for performing the following operation:
determining the required state for the changed secondary carrier according to state indication information added by the network device to the secondary carrier change instruction.

In a sixth possible implementation manner that is provided based on the first, second, third or fourth possible implementation manner, the memory of the terminal further includes an instruction for performing the following operation:
determining the required state for the changed secondary carrier according to a preset state determining policy.

In a seventh possible implementation manner that is provided based on the first, second, third, fourth, fifth or sixth possible implementation manner, the memory of the terminal further includes an instruction for performing the following operation:
determining a frame boundary of the changed secondary carrier by means of synchronization channel search.

In an eighth possible implementation manner that is provided based on the first, second, third, fourth, fifth or sixth possible implementation manner, the memory of the terminal further includes an instruction for performing the following operation:
determining a frame boundary of the changed secondary carrier according to synchronization indication information added by the network device to the secondary carrier change instruction, where
when the synchronization indication information indicates that resynchronization is required, the frame boundary of the changed secondary carrier is redetermined by means of synchronization channel search; or
when the synchronization indication information instructs to use synchronization information of an original secondary carrier, a frame boundary of the original secondary carrier is determined as the frame boundary of the changed secondary carrier; or
when the synchronization indication information is information about a reference cell, the frame boundary of the changed secondary carrier is determined according to a frame boundary of the reference cell indicated by the information about the reference cell.

In a ninth possible implementation manner that is provided based on any one of the first to the eighth possible implementation manners, the memory of the terminal further includes an instruction for performing the following operation:
sending a synchronization completion message to the network device, so that the network device sends data to the terminal according to the synchronization completion message.

In summary, the terminal provided in this embodiment receives a secondary carrier change instruction sent by a network device, where the secondary carrier change instruction includes feature information of a changed secondary carrier, determines the changed secondary carrier according to the feature information of the changed secondary carrier, sets, according to a required state for the changed secondary carrier, a state of the changed secondary carrier to the required state, where the required state for the changed secondary carrier includes an activated state and a deactivated state, and determines synchronization information of the changed secondary carrier. According to the method for changing a secondary carrier provided in this embodiment of the present invention, the state of the changed secondary carrier can be set as required, which improves flexibility of state setting for the changed secondary carrier.

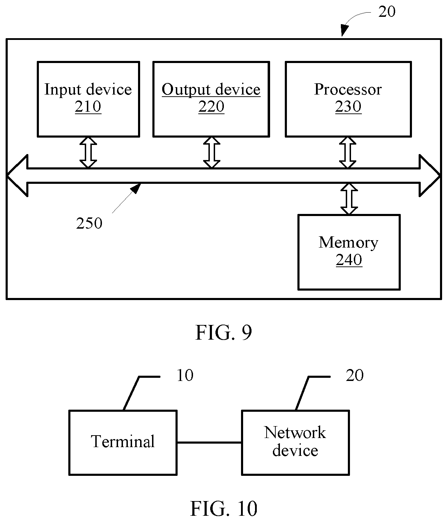

FIG. 9 is a schematic structural diagram of a network device 20 according to an embodiment of the present invention. The network device 20 may include an input device 210, an output device 220, a processor 230, and a memory 240.

The memory 240 may include a read-only memory and a random access memory, and provides an instruction and data to the processor 230. A part of the memory 240 may further include a non-volatile random access memory (NVRAM).

The memory 240 stores the following elements, executable modules or data structures, or a subset thereof, or an extended set thereof:
operation instructions, including various operation instructions and used to perform various operations; and
an operating system, including various system programs and used to implement various basic services and process a service based on hardware.

In this embodiment of the present invention, the processor 230 executes the following operations by invoking the operation instructions (where the operation instructions may be stored in the operating system) stored in the memory 240:
sending a secondary carrier change instruction to a terminal by using the output device 220, where the secondary carrier change instruction includes feature information of a changed secondary carrier, so that the terminal determines the changed secondary carrier according to the feature information of the changed secondary carrier; receiving, by using the input device 210, a synchronization completion message sent by the terminal; determining, according to the synchronization completion message, that the terminal has already synchronized with the changed secondary carrier; and sending data to the terminal by using the changed secondary carrier.

The processor 230 controls an operation of the network device 20, and the processor 230 may also be referred to as a CPU (Central Processing Unit, central processing unit). The memory 240 may include a read-only memory and a random access memory, and provides an instruction and data to the processor 230. A part of the memory 240 may further include a non-volatile random access memory (NVRAM). In specific application, components of the network device 20 are coupled together by using a bus system 250, where in addition to a data bus, the bus system 250 may include a power bus, a control bus, a status signal bus, and the like. However, for clear description, various types of buses in the figure are marked as the bus system 250.

The method disclosed in the foregoing embodiment of the present invention may be applied to the processor 230, or be implemented by the processor 230. The processor 230 may be an integrated circuit chip and has a signal processing capability. In an implementation process, each step of the foregoing method may be implemented by a hardware integrated logic circuit in the processor 230 or by an instruction in a software form. The foregoing processor 230 may be a general purpose processor, a digital signal processor (DSP), an application-specific integrated circuit (ASIC), a field programmable gate array (FPGA), or another programmable logical device, discrete gate or transistor logical device, or discrete hardware component. The processor 230 may implement or execute methods, steps and logical block diagrams disclosed in the embodiments of the present invention. The general purpose processor may be a microprocessor or the processor may be any conventional processor and the like. Steps of the methods disclosed with reference to the embodiments of the present invention may be directly executed and completed by means of a hardware decoding processor, or may be executed and completed by using a combination of hardware and software modules in the decoding processor. The software module may be located in a mature storage medium in the field, such as a random access memory, a flash memory, a read-only memory, a programmable read-only memory, an electrically-erasable programmable memory, or a register. The storage medium is located in the memory 240, and the processor 230 reads information in the memory 240 and completes the steps in the foregoing methods in combination with hardware of the processor.

Optionally, the processor 230 may further add state indication information to the secondary carrier change instruction, so that the terminal determines a required state for the changed secondary carrier according to the state indication information, where the required state for the changed secondary carrier includes an activated state and a deactivated state.

Optionally, the processor 230 may also add synchronization indication information to the secondary carrier change instruction, so that the terminal determines synchronization information of the changed secondary carrier according to the synchronization indication information.

Referring to FIG. 10, an embodiment of the communications system according to the embodiments of the present invention includes: a terminal 10 and a network device 20, where
the network device 20 sends a secondary carrier change instruction to the terminal, where the secondary carrier change instruction includes feature information of a changed secondary carrier;
the terminal 10 receives the secondary carrier change instruction sent by the network device, determines the changed secondary carrier according to the feature information of the changed secondary carrier, sets, according to a required state for the changed secondary carrier, a state of the changed secondary carrier to the required state, where the required state for the changed secondary carrier includes an activated state and a deactivated state, and determines synchronization information of the changed secondary carrier; and
after receiving a synchronization completion message sent by the terminal, the network device 20 sends data to the terminal by using the changed secondary carrier.

A person of ordinary skill in the art may understand that all or some of the steps of the methods in the embodiments may be implemented by a program instructing relevant hardware. The program may be stored in a computer-readable storage medium. The storage medium may include: a ROM, a RAM, a magnetic disk, or an optical disc.

The method for changing a secondary carrier, the terminal, the network device, and the system that are provided in the embodiments of the present invention are described in detail above. In this specification, specific examples are used to describe the principle and implementation manners of the present invention, and the description of the embodiments is only intended to help understand the method and core idea of the present invention. Meanwhile, a person of ordinary skill in the art may, based on the idea of the present invention, make modifications with respect to the specific implementation manners and the application scope. Therefore, the content of this specification shall not be construed as a limitation to the present invention.

## Claims

1. A terminal, comprising:
a receiving unit (101), configured to receive a secondary carrier change instruction sent by a network device, wherein the secondary carrier change instruction includes feature information of a changed secondary carrier, wherein the feature information of the changed secondary carrier is at least one of a frequency and a bandwidth of the changed secondary carrier, or wherein the feature information of the changed secondary carrier is a number of a secondary carrier preset on the terminal, and wherein the secondary carrier change instruction further includes state indication information, wherein the state indication information enables determination of a required state for the changed secondary carrier, wherein the required state for the changed secondary carrier includes an activated state and a deactivated state;
a first determining unit (102), configured to determine the changed secondary carrier according to the feature information, received by the receiving unit, of the changed secondary carrier, and further configured to determine the required state for the changed secondary carrier according to the state indication information;
a setting unit (103), configured to set, according to the required state for the changed secondary carrier determined by the first determining unit, a state of the changed secondary carrier to the required state, ; and
a second determining unit (104), configured to determine synchronization information of the changed secondary carrier determined by the first determining unit.

2. The terminal according to claim 1, wherein
the second determining unit is configured to determine a frame boundary of the changed secondary carrier according to synchronization indication information added by the network device to the secondary carrier change instruction.

3. The terminal according to claim 2, wherein when the synchronization indication information instructs to use synchronization information of an original secondary carrier,
the second determining unit is configured to determine a frame boundary of the original secondary carrier as the frame boundary of the changed secondary carrier.

4. The terminal according to any one of claims 1 to 3, wherein the terminal further comprises:
a sending unit (105), configured to: after the second determining unit determines the synchronization information, send a synchronization completion message to the network device, so that the network device sends data to the terminal according to the synchronization completion message.

5. A network device, comprising:
a sending unit (201), configured to send a secondary carrier change instruction to a terminal, wherein the secondary carrier change instruction includes feature information of a changed secondary carrier, wherein the feature information of the changed secondary carrier is at least one of a frequency and a bandwidth of the changed secondary carrier, or wherein the feature information of the changed secondary carrier is a number of a secondary carrier preset on the terminal, and wherein the secondary carrier change instruction further includes state indication information, wherein the state indication information enables determination of a required state for the changed secondary carrier, wherein the required state for the changed secondary carrier includes an activated state and a deactivated state,
wherein the secondary carrier change instruction causes the terminal to determine the changed secondary carrier according to the feature information of the changed secondary carrier and set, according to the required state for the changed secondary carrier, a state of the changed secondary carrier to the required state;
a receiving unit (202), configured to receive a synchronization completion message sent by the terminal; and
a determining unit (203), configured to determine, according to the synchronization completion message received by the receiving unit, that the terminal has already synchronized with the changed secondary carrier, wherein
the sending unit is configured to: after the determining unit determines that the terminal has already synchronized with the changed secondary carrier, send data to the terminal by using the changed secondary carrier.

6. The network device according to claim 5, wherein the network device further comprises:
a second adding unit (205), configured to add synchronization indication information to the secondary carrier change instruction sent by the sending unit, wherein the secondary carrier change instruction causes the terminal to determine synchronization information of the changed secondary carrier according to the synchronization indication information.

7. A method for changing a secondary carrier, comprising:
receiving (301) a secondary carrier change instruction sent by a network device, wherein the secondary carrier change instruction includes feature information of a changed secondary carrier, wherein the feature information of the changed secondary carrier is at least one of a frequency and a bandwidth of the changed secondary carrier, or wherein the feature information of the changed secondary carrier is a number of a secondary carrier preset on the terminal, and wherein the secondary carrier change instruction further includes state indication information, wherein the state indication information enables determination of a required state for the changed secondary carrier, wherein the required state for the changed secondary carrier includes an activated state and a deactivated state;
determining (302) the changed secondary carrier according to the feature information of the changed secondary carrier and determining the required state for the changed secondary carrier according to state indication information;
setting (303), according to the required state for the changed secondary carrier, a state of the changed secondary carrier to the required state; and
determining (304) synchronization information of the changed secondary carrier.

8. The method according to claim 7, wherein the determining synchronization information of the changed secondary carrier comprises:
determining a frame boundary of the changed secondary carrier according to synchronization indication information added by the network device to the secondary carrier change instruction.

9. The method according to claim 8, wherein when the synchronization indication information instructs to use synchronization information of an original secondary carrier, the determining a frame boundary of the changed secondary carrier comprises:
determining a frame boundary of the original secondary carrier as the frame boundary of the changed secondary carrier.

10. The method according to any one of claims 7 to 9, wherein after the determining synchronization information of the changed secondary carrier, the method further comprises:
sending a synchronization completion message to the network device, so that the network device sends data to a terminal according to the synchronization completion message.

11. A method for changing a secondary carrier, comprising:
sending (401) a secondary carrier change instruction to a terminal, wherein the secondary carrier change instruction includes feature information of a changed secondary carrier, wherein the feature information of the changed secondary carrier is at least one of a frequency and a bandwidth of the changed secondary carrier, or wherein the feature information of the changed secondary carrier is a number of a secondary carrier preset on the terminal, and wherein the secondary carrier change instruction further includes state indication information, wherein the state indication information enables determination of a required state for the changed secondary carrier, wherein the required state for the changed secondary carrier includes an activated state and a deactivated state,
wherein the secondary carrier change instruction causes the terminal to determine the changed secondary carrier according to the feature information of the changed secondary carrier and set, according to the required state for the changed secondary carrier, a state of the changed secondary carrier to the required state;
receiving (402) a synchronization completion message sent by the terminal;
determining (403), according to the synchronization completion message, that the terminal has already synchronized with the changed secondary carrier; and
sending (404) data to the terminal by using the changed secondary carrier.

12. The method according to claim 11, wherein the method further comprises:
adding synchronization indication information to the secondary carrier change instruction, wherein the secondary carrier change instruction causes the terminal to determine synchronization information of the changed secondary carrier according to the synchronization indication information.

13. A computer-readable storage medium comprising instructions which, when executed by a computer, cause the computer to carry out the method according to any one of claims 7 to 12.

## Patentansprüche

1. Endgerät, umfassend:
eine Empfangseinheit (101), die dazu konfiguriert ist, einen Befehl zum Austauschen eines sekundären Trägers zu empfangen, der durch eine Netzwerkvorrichtung gesendet wird, wobei der Befehl zum Austauschen eines sekundären Trägers eine Merkmalsinformation eines ausgetauschten sekundären Trägers beinhaltet, wobei die Merkmalsinformation des ausgetauschten sekundären Trägers eine Frequenz und/oder eine Bandbreite des ausgetauschten sekundären Trägers ist, oder wobei die Merkmalsinformation des ausgetauschten sekundären Trägers eine Nummer eines sekundären Trägers ist, die auf dem Endgerät voreingestellt ist, und wobei der Befehl zum Austauschen des sekundären Trägers ferner eine Zustandsangabeinformation beinhaltet, wobei die Zustandsangabeinformation die Bestimmung eines erforderlichen Zustands für den ausgetauschten sekundären Träger ermöglicht, wobei der erforderliche Zustand für den ausgetauschten sekundären Träger einen aktivierten Zustand und einen deaktivierten Zustand beinhaltet;
eine erste Bestimmungseinheit (102), die dazu konfiguriert ist, den ausgetauschten sekundären Träger gemäß der von der Empfangseinheit empfangenen Merkmalsinformation des ausgetauschten sekundären Trägers zu bestimmen, und ferner dazu konfiguriert ist, den erforderlichen Zustand für den ausgetauschten sekundären Träger gemäß der Zustandsangabeinformation zu bestimmen;
eine Einstelleinheit (103), die dazu konfiguriert ist, gemäß dem erforderlichen Zustand für den ausgetauschten sekundären Träger, der von der ersten Bestimmungseinheit bestimmt wird, einen Zustand des ausgetauschten sekundären Trägers auf den erforderlichen Zustand einzustellen; und
eine zweite Bestimmungseinheit (104), die dazu konfiguriert ist, eine Synchronisationsinformation des ausgetauschten sekundären Trägers zu bestimmen, die von der ersten Bestimmungseinheit bestimmt wird.

2. Endgerät nach Anspruch 1, wobei
die zweite Bestimmungseinheit dazu konfiguriert ist, eine Rahmenbegrenzung des ausgetauschten sekundären Trägers gemäß der Synchronisationsangabeinformation zu bestimmen, die durch die Netzwerkvorrichtung zu dem Befehl zum Austauschen des sekundären Trägers hinzugefügt wurde.

3. Endgerät nach Anspruch 2, wobei, wenn die Synchronisationsangabeinformation anweist, eine Synchronisationsinformation eines ursprünglichen sekundären Trägers zu verwenden,
die zweite Bestimmungseinheit dazu konfiguriert ist, eine Rahmenbegrenzung des ursprünglichen sekundären Trägers als die Rahmenbegrenzung des ausgetauschten sekundären Trägers zu bestimmen.

4. Endgerät nach einem der Ansprüche 1 bis 3, wobei das Endgerät ferner umfasst:
eine Sendeeinheit (105), die dazu konfiguriert ist: nachdem die zweite Bestimmungseinheit die Synchronisationsinformation bestimmt, eine Synchronisationsabschlussnachricht an die Netzwerkvorrichtung zu senden, so dass die Netzwerkvorrichtung Daten gemäß der Synchronisationsabschlussnachricht an das Endgerät sendet.

5. Netzwerkvorrichtung, umfassend:
eine Sendeeinheit (201), die dazu konfiguriert ist, einen Befehl zum Austauschen eines sekundären Trägers an ein Endgerät zu senden, wobei der Befehl zum Austauschen eines sekundären Trägers eine Merkmalsinformation eines ausgetauschten sekundären Trägers beinhaltet, wobei die Merkmalsinformation des ausgetauschten sekundären Trägers eine Frequenz und/oder eine Bandbreite des ausgetauschten sekundären Trägers ist, oder wobei die Merkmalsinformation des ausgetauschten sekundären Trägers eine Nummer eines sekundären Trägers ist, die auf dem Endgerät voreingestellt ist, und wobei der Befehl zum Austauschen des sekundären Trägers ferner eine Zustandsangabeinformation beinhaltet, wobei die Zustandsangabeinformation die Bestimmung eines erforderlichen Zustands für den ausgetauschten sekundären Träger ermöglicht, wobei der erforderliche Zustand für den ausgetauschten sekundären Träger einen aktivierten Zustand und einen deaktivierten Zustand beinhaltet,
wobei der Befehl zum Austauschen des sekundären Trägers das Endgerät veranlasst, den ausgetauschten sekundären Träger gemäß der Merkmalsinformation des ausgetauschten sekundären Trägers zu bestimmen und gemäß dem erforderlichen Zustand für den ausgetauschten sekundären Träger einen Zustand des ausgetauschten sekundären Trägers auf den erforderlichen Zustand einzustellen;
eine Empfangseinheit (202), das dazu konfiguriert ist, eine durch das Endgerät gesendete Synchronisationsabschlussnachricht zu empfangen; und
eine Bestimmungseinheit (203), die dazu konfiguriert ist, gemäß der von der Empfangseinheit empfangenen Synchronisationsabschlussnachricht zu bestimmen,
dass sich das Endgerät bereits mit dem ausgetauschten sekundären Träger synchronisiert hat, wobei
die Sendeeinheit dazu konfiguriert ist: nachdem die Bestimmungseinheit bestimmt hat, dass sich das Endgerät bereits mit dem ausgetauschten sekundären Träger synchronisiert hat, Daten unter Verwendung des ausgetauschten sekundären Trägers an das Endgerät zu senden.

6. Netzwerkvorrichtung nach Anspruch 5, wobei die Netzwerkvorrichtung ferner umfasst:
eine zweite Hinzufügungseinheit (205), die dazu konfiguriert ist, eine Synchronisationsangabeinformation zu dem von der Sendeeinheit gesendeten Befehl zum Austauschen des sekundären Trägers hinzuzufügen, wobei der Befehl zum Austauschen des sekundären Trägers das Endgerät veranlasst, eine Synchronisationsinformation des ausgetauschten sekundären Trägers gemäß der Synchronisationsangabeinformation zu bestimmen.

7. Verfahren zum Austauschen eines sekundären Trägers, umfassend:
Empfangen (301) eines Befehls zum Austauschen eines sekundären Trägers, der durch eine Netzwerkvorrichtung gesendet wird, wobei der Befehl zum Austauschen eines sekundären Trägers eine Merkmalsinformation eines ausgetauschten sekundären Trägers beinhaltet, wobei die Merkmalsinformation des ausgetauschten sekundären Trägers eine Frequenz und/oder eine Bandbreite des ausgetauschten sekundären Trägers ist, oder wobei die Merkmalsinformation des ausgetauschten sekundären Trägers eine Nummer eines sekundären Trägers ist, die auf dem Endgerät voreingestellt ist, und wobei der Befehl zum Austauschen des sekundären Trägers ferner eine Zustandsangabeinformation beinhaltet, wobei die Zustandsangabeinformation die Bestimmung eines erforderlichen Zustands für den ausgetauschten sekundären Träger ermöglicht, wobei der erforderliche Zustand für den ausgetauschten sekundären Träger einen aktivierten Zustand und einen deaktivierten Zustand beinhaltet;
Bestimmen (302) des ausgetauschten sekundären Trägers gemäß der Merkmalsinformation des ausgetauschten sekundären Trägers und Bestimmen des erforderlichen Zustands für den ausgetauschten sekundären Träger gemäß der Zustandsangabeinformation;
Einstellen (303), gemäß dem erforderlichen Zustand für den ausgetauschten sekundären Träger, eines Zustandes des ausgetauschten sekundären Trägers auf den erforderlichen Zustand; und
Bestimmen (304) der Synchronisationsinformation des ausgetauschten sekundären Trägers.

8. Verfahren nach Anspruch 7, wobei das Bestimmen der Synchronisationsinformation des ausgetauschten sekundären Trägers umfasst:
Bestimmen einer Rahmengrenze des ausgetauschten sekundären Trägers gemäß der Synchronisationsangabeinformation, die durch die Netzwerkvorrichtung zu dem Befehl zum Austauschen des sekundären Trägers hinzugefügt wurde.

9. Verfahren nach Anspruch 8, wobei, wenn die Synchronisationsangabeinformation anweist, eine Synchronisationsinformation eines ursprünglichen sekundären Trägers zu verwenden, das Bestimmen einer Rahmenbegrenzung des ausgetauschten sekundären Trägers umfasst:
Bestimmen einer Rahmenbegrenzung des ursprünglichen sekundären Trägers als die Rahmenbegrenzung des ausgetauschten sekundären Trägers.

10. Verfahren nach einem der Ansprüche 7 bis 9, wobei nach dem Bestimmen der Synchronisationsinformation des ausgetauschten sekundären Trägers das Verfahren ferner umfasst:
Senden einer Synchronisationsabschlussnachricht an die Netzwerkvorrichtung, so dass die Netzwerkvorrichtung Daten gemäß der Synchronisationsabschlussnachricht an ein Endgerät sendet.

11. Verfahren zum Austauschen eines sekundären Trägers, umfassend:
Senden (401) eines Befehls zum Austauschen eines sekundären Trägers an ein Endgerät, wobei der Befehl zum Austauschen eines sekundären Trägers eine Merkmalsinformation eines ausgetauschten sekundären Trägers beinhaltet, wobei die Merkmalsinformation des ausgetauschten sekundären Trägers eine Frequenz und/oder eine Bandbreite des ausgetauschten sekundären Trägers ist, oder wobei die Merkmalsinformation des ausgetauschten sekundären Trägers eine Nummer eines sekundären Trägers ist, die auf dem Endgerät voreingestellt ist, und wobei der Befehl zum Austauschen des sekundären Trägers ferner eine Zustandsangabeinformation beinhaltet, wobei die Zustandsangabeinformation die Bestimmung eines erforderlichen Zustands für den ausgetauschten sekundären Träger ermöglicht, wobei der erforderliche Zustand für den ausgetauschten sekundären Träger einen aktivierten Zustand und einen deaktivierten Zustand beinhaltet,
wobei der Befehl zum Austauschen des sekundären Trägers das Endgerät veranlasst, den ausgetauschten sekundären Träger gemäß der Merkmalsinformation des ausgetauschten sekundären Trägers zu bestimmen und gemäß dem erforderlichen Zustand für den ausgetauschten sekundären Träger einen Zustand des ausgetauschten sekundären Trägers auf den erforderlichen Zustand einzustellen;
Empfangen (402) einer Synchronisationsabschlussnachricht, die durch das Endgerät gesendet wurde;
Bestimmen (403) gemäß der Synchronisationsabschlussnachricht, dass sich das Endgerät bereits mit dem ausgetauschten sekundären Träger synchronisiert hat; und Senden (404) von Daten an das Endgerät unter Verwendung des ausgetauschten sekundären Trägers.

12. Verfahren nach Anspruch 11, wobei das Verfahren ferner umfasst:
Hinzufügen einer Synchronisationsangabeinformation zu dem Befehl zum Austauschen des sekundären Trägers, wobei der Befehl zum Austauschen des sekundären Trägers das Endgerät veranlasst, die Synchronisationsinformation des ausgetauschten sekundären Trägers gemäß der Synchronisationsangabeinformation zu bestimmen.

13. Computerlesbarer Datenträger umfassend Befehle, die, wenn sie von einem Computer ausgeführt werden, den Computer veranlassen, das Verfahren nach einem der Ansprüche 7 bis 12 durchzuführen.

## Revendications

1. Terminal, comprenant :
une unité de réception (101), configurée pour recevoir une instruction de changement de porteuse secondaire envoyée par un dispositif de réseau, l'instruction de changement de porteuse secondaire comportant des informations de caractéristique d'une porteuse secondaire changée, les informations de caractéristique de la porteuse secondaire changée étant une fréquence et/ou une largeur de bande de la porteuse secondaire changée, ou les informations de caractéristique de la porteuse secondaire changée étant un numéro d'une porteuse secondaire préétablie sur le terminal, et l'instruction de changement de porteuse secondaire comportant en outre des informations d'indication d'état, les informations d'indication d'état permettant la détermination d'un état exigé pour la porteuse secondaire changée, l'état exigé pour la porteuse secondaire changée comportant un état activé et un état désactivé ;
une première unité de détermination (102), configurée pour déterminer la porteuse secondaire changée selon les informations de caractéristique, reçues par l'unité de réception, de la porteuse secondaire changée, et configurée en outre pour déterminer l'état exigé pour la porteuse secondaire changée selon les informations d'indication d'état ;
une unité d'établissement (103), configurée pour établir, selon l'état exigé pour la porteuse secondaire changée déterminé par la première unité de détermination, un état de la porteuse secondaire changée à l'état exigé ; et
une deuxième unité de détermination (104), configurée pour déterminer des informations de synchronisation de la porteuse secondaire changée déterminée par la première unité de détermination.

2. Terminal selon la revendication 1, dans lequel
la deuxième unité de détermination est configurée pour déterminer une limite de trame de la porteuse secondaire changée selon des informations d'indication de synchronisation ajoutées par le dispositif de réseau à l'instruction de changement de porteuse secondaire.

3. Terminal selon la revendication 2, dans lequel, lorsque les informations d'indication de synchronisation donnent pour instruction d'utiliser des informations de synchronisation d'une porteuse secondaire d'origine,
la deuxième unité de détermination est configurée pour déterminer une limite de trame de la porteuse secondaire d'origine comme la limite de trame de la porteuse secondaire changée.

4. Terminal selon l'une quelconque des revendications 1 à 3, lequel terminal comprend en outre :
une unité d'envoi (105), configurée pour : après que la deuxième unité de détermination a déterminé les informations de synchronisation, envoyer un message d'achèvement de synchronisation au dispositif de réseau, de sorte que le dispositif de réseau envoie des données au terminal selon le message d'achèvement de synchronisation.

5. Dispositif de réseau, comprenant :
une unité d'envoi (201), configurée pour envoyer une instruction de changement de porteuse secondaire à un terminal, l'instruction de changement de porteuse secondaire comportant des informations de caractéristique d'une porteuse secondaire changée, les informations de caractéristique de la porteuse secondaire changée étant une fréquence et/ou une largeur de bande de la porteuse secondaire changée, ou les informations de caractéristique de la porteuse secondaire changée étant un numéro d'une porteuse secondaire préétablie sur le terminal, et l'instruction de changement de porteuse secondaire comportant en outre des informations d'indication d'état, les informations d'indication d'état permettant la détermination d'un état exigé pour la porteuse secondaire changée, l'état exigé pour la porteuse secondaire changée comportant un état activé et un état désactivé,
l'instruction de changement de porteuse secondaire amenant le terminal à déterminer la porteuse secondaire changée selon les informations de caractéristique de la porteuse secondaire changée et établir, selon l'état exigé pour la porteuse secondaire changée, un état de la porteuse secondaire changée à l'état exigé ;
une unité de réception (202), configurée pour recevoir un message d'achèvement de synchronisation envoyé par le terminal ; et
une unité de détermination (203), configurée pour déterminer, selon le message d'achèvement de synchronisation reçu par l'unité de réception, que le terminal s'est déjà synchronisé avec la porteuse secondaire changée,
l'unité d'envoi étant configurée pour : après que l'unité de détermination a déterminé que le terminal s'est déjà synchronisé avec la porteuse secondaire changée, envoyer des données au terminal au moyen de la porteuse secondaire changée.

6. Dispositif de réseau selon la revendication 5, lequel dispositif de réseau comprend en outre :
une deuxième unité d'ajout (205), configurée pour ajouter des informations d'indication de synchronisation à l'instruction de changement de porteuse secondaire envoyée par l'unité d'envoi, l'instruction de changement de porteuse secondaire amenant le terminal à déterminer des informations de synchronisation de la porteuse secondaire changée selon les informations d'indication de synchronisation.

7. Procédé de changement d'une porteuse secondaire, comprenant :
la réception (301) d'une instruction de changement de porteuse secondaire envoyée par un dispositif de réseau, l'instruction de changement de porteuse secondaire comportant des informations de caractéristique d'une porteuse secondaire changée, les informations de caractéristique de la porteuse secondaire changée étant une fréquence et/ou une largeur de bande de la porteuse secondaire changée, ou les informations de caractéristique de la porteuse secondaire changée étant un numéro d'une porteuse secondaire préétablie sur le terminal, et l'instruction de changement de porteuse secondaire comportant en outre des informations d'indication d'état, les informations d'indication d'état permettant la détermination d'un état exigé pour la porteuse secondaire changée, l'état exigé pour la porteuse secondaire changée comportant un état activé et un état désactivé ;
la détermination (302) de la porteuse secondaire changée selon les informations de caractéristique de la porteuse secondaire changée, et la détermination de l'état exigé pour la porteuse secondaire changée selon les informations d'indication d'état ;
l'établissement (303), selon l'état exigé pour la porteuse secondaire changée, d'un état de la porteuse secondaire changée à l'état exigé ; et
la détermination (304) d'informations de synchronisation de la porteuse secondaire changée.

8. Procédé selon la revendication 7, dans lequel la détermination d'informations de synchronisation de la porteuse secondaire changée comprend :
la détermination d'une limite de trame de la porteuse secondaire changée selon des informations d'indication de synchronisation ajoutées par le dispositif de réseau à l'instruction de changement de porteuse secondaire.

9. Procédé selon la revendication 8, dans lequel, lorsque les informations d'indication de synchronisation donnent pour instruction d'utiliser des informations de synchronisation d'une porteuse secondaire d'origine, la détermination d'une limite de trame de la porteuse secondaire changée comprend :
la détermination d'une limite de trame de la porteuse secondaire d'origine comme la limite de trame de la porteuse secondaire changée.

10. Procédé selon l'une quelconque des revendications 7 à 9, lequel procédé comprend en outre, après la détermination d'informations de synchronisation de la porteuse secondaire changée :
l'envoi d'un message d'achèvement de synchronisation au dispositif de réseau, de sorte que le dispositif de réseau envoie des données à un terminal selon le message d'achèvement de synchronisation.

11. Procédé de changement d'une porteuse secondaire, comprenant :
l'envoi (401) d'une instruction de changement de porteuse secondaire à un terminal, l'instruction de changement de porteuse secondaire comportant des informations de caractéristique d'une porteuse secondaire changée, les informations de caractéristique de la porteuse secondaire changée étant une fréquence et/ou une largeur de bande de la porteuse secondaire changée, ou les informations de caractéristique de la porteuse secondaire changée étant un numéro d'une porteuse secondaire préétablie sur le terminal, et l'instruction de changement de porteuse secondaire comportant en outre des informations d'indication d'état, les informations d'indication d'état permettant la détermination d'un état exigé pour la porteuse secondaire changée, l'état exigé pour la porteuse secondaire changée comportant un état activé et un état désactivé,
l'instruction de changement de porteuse secondaire amenant le terminal à déterminer la porteuse secondaire changée selon les informations de caractéristique de la porteuse secondaire changée et établir, selon l'état exigé pour la porteuse secondaire changée, un état de la porteuse secondaire changée à l'état exigé ;
la réception (402) d'un message d'achèvement de synchronisation envoyé par le terminal ;
la détermination (403), selon le message d'achèvement de synchronisation, que le terminal s'est déjà synchronisé avec la porteuse secondaire changée ; et
l'envoi (404) de données au terminal au moyen de la porteuse secondaire changée.

12. Procédé selon la revendication 11, lequel procédé comprend en outre :
l'ajout d'informations d'indication de synchronisation à l'instruction de changement de porteuse secondaire, l'instruction de changement de porteuse secondaire amenant le terminal à déterminer des informations de synchronisation de la porteuse secondaire changée selon les informations d'indication de synchronisation.

13. Support d'enregistrement lisible par ordinateur comprenant des instructions qui, lorsqu'elles sont exécutées par un ordinateur, amènent l'ordinateur à réaliser le procédé selon l'une quelconque des revendications 7 à 12.
